# EUROPÄISCHE PATENTANMELDUNG

(11) **EP 2 620 525 A1**
(43) Veröffentlichungstag der Anmeldung: **31.07.2013**
(21) Anmeldenummer: 12002885.7
(22) Anmeldetag: 24.04.2012
(51) Int. Cl.: C23C 24/04, C23C 24/08

(54) **Verfahren zum Kaltgasspritzen**

(30) Priorität: 24.01.2012 DE 102012001361
(71) Anmelder: Linde Aktiengesellschaft, 80331 Munich (DE)
(72) Erfinder: Gärtner, Frank, Dr., 22119 Hamburg (DE); Gutzmann, Henning, 22119 Hamburg (DE); Klassen, Thomas, Prof. Dr., 21465 Wentorf (DE); Kliemann, Jan-Oliver, 20255 Hamburg (DE); Yamada, Motohiro, Dr., Kitayama Toyohashi Aichi 441-8105 (JP); Heinrich, Peter, 82110 Germering (DE); Krömmer, Werner, 84034 Landshut (DE)

(57) **Zusammenfassung**

Es handelt sich um ein Verfahren zum Kaltgasspritzen, bei welchem ein Spritzpulver, welches photokatalytisch aktive Spritzpartikel enthält, mittels einem Trägergas in einer Düse beschleunigt wird und beim Auftreffen auf ein Substrat eine Beschichtung bildet. Erfindungsgemäß zeichnet sich das Verfahren dadurch aus, dass zumindest ein Teil der photokatalytisch aktiven Spritzpartikel aus nanokristallinen Agglomeraten bestehen, welche eine Porosität von 200 bis 800 m²/g aufweisen, wobei die Porosität mittels einer BET-Messung mit Stickstoff bestimmt wird. Ferner werden mit dem erfindungsgemäßen Verfahren hergestellte Beschichtungen sowie Gegenstände, welche eine solche Beschichtung aufweisen, beansprucht.

## Beschreibung

Die Erfindung betrifft ein Verfahren zum Kaltgasspritzen, bei welchem ein Spritzpulver, welches photokatalytisch aktive Spritzpartikel enthält, mittels eines Trägergases in einer Düse beschleunigt wird und beim Auftreffen auf ein Substrat eine Beschichtung bildet. Ferner betrifft die Erfindung Beschichtungen und Gegenstände mit Beschichtung.

Beim Kaltgasspritzen werden typischerweise metallische Spritzpartikel in einem verhältnismäßig kalten Gasstrom, einem Trägergas, auf hohe Geschwindigkeiten beschleunigt, so dass sie beim Auftreffen auf ein Substrat oder Werkstück eine Beschichtung bilden, indem sich die Partikel beim Aufprall plastisch verformen. Damit eine Beschichtung entsteht, müssen die Partikel eine Mindestaufprallgeschwindigkeit aufweisen. Die Beschleunigung des Trägergases und der Partikel erfolgt in der Regel in einer Lavaldüse. Das Trägergas wird häufig erwärmt, weil die Partikel im warmen Trägergas duktilisieren, so dass beim Aufprall die Schichtbildung unterstützt wird. Zudem werden höhere Trägergasgeschwindigkeiten erreicht. Dabei ist jedoch darauf zu achten, dass die Spritzpartikel nicht anschmelzen. Die Temperatur des Trägergases ist deshalb verhältnismäßig gering, so dass man von Kaltgasspritzen oder kinetischem Spritzen spricht.

Es gibt verschiedene Verfahren photokatalytisch aktive Beschichtungen herzustellen. Solche Beschichtungen weisen bei Lichteinfall eine katalytische Wirkung auf. Diese zeigt sich beispielsweise in einer antibakteriellen oder antiviralen Wirkung oder auch im Anstoßen von Redoxreaktion. Es ist also eine Desinfektion und Reinigung möglich, indem Schadstoffe entfernt und Bakterien und Viren getötet werden. Solche photokatalytisch aktive Schichten sind häufig aus Titandioxid. Beispielsweise durch eine Dotierung des Titandioxids kann erreicht werden, dass eine Titandioxidbeschichtung, welche normalerweise nur im UV-Licht photokatalytisch aktiv ist, auch im sichtbaren Licht aktiv wird.

Die EP 2 302 099 beinhaltet ein Beschichten von Sanitär-, Küchen- und medizintechnischen Gegenständen mittels Kaltgasspritzen mit photokatalytisch aktivem Titandioxid. In der EP 1 785 508 ist ein Kaltgasspritzen von photokatalytisch aktivem Titandioxid offenbart, wobei das Spritzpulver aus photokatalytisch aktivem Titandioxid mit einer metallischen Komponente besteht. In der DE 10 2004 038 795 ist die Herstellung von photokatalytischen aktiven Kunststoffoberflächen mittels Kaltgasspritzen offenbart. Auch in der JP2009066594 ist ein Kaltgasspritzen von photokatalytisch aktivem Titandioxid offenbart, das mit Stickstoff, Kohlenstoff oder Schwefel dotiert wurde, damit es im sichtbaren Licht photokatalytisch aktiv ist. Auch in der CN1443071 ist ein Kaltgasspritzen von Titandioxid offenbart.

In dem Artikel "Deposition of TIO2 Ceramic Particles on Cold Spray Process" von M.Yamada et al. in, DVS 264, 172-176, 2010 wird eine Kaltgasspritzen von Titandioxid beschrieben, wobei hier Nano-Primärpartikel verwendet werden.

In dem Artikel "Formation of TiO2 photocatalyst through cold spraying" von C.-J.Li et al., IEEE Conference on Intelligent Transportation, ITSC Proceedings, 10. Mai 2004, Seiten 1-5, wird ein Kaltgasspritzen von photokatalytisch aktivem Titandioxid beschrieben. Ein solches wird ebenfalls beschrieben von J.-O.Kliemann et al. in "Layer formation of cold-sprayed ceramic titanium dioxide layers on metal surfaces", DVS 264, 90-95, 2010.

Auch in der EP 2 257 656 wird das Kaltgasspritzen von photokatalytisch aktiven Beschichtungen beschrieben. Hierbei wird als Spritzpulver ein Matrixmaterial mit nanokristallinem Titandioxid verwendet, wobei während des Kaltgasspritzens erreicht wird, dass sich die photokatalytische Aktivität ins Sichtbare verschiebt, indem die Bearbeitungsstelle mit UV- oder Laserlicht bestrahlt wird.

Gemäß der Erfindung wird ein Verfahren zum Kaltgasspritzen vorgeschlagen, bei welchem ein Spritzpulver, welches photokatalytisch aktive Spritzpartikel enthält, mittels einem Trägergas in einer Düse beschleunigt und beim Auftreffen auf ein Substrat eine Beschichtung bildet, **dadurch gekennzeichnet, dass** zumindest ein Teil der photokatalytisch aktiven Spritzpartikel aus nanokristallinen Agglomeraten besteht, welche eine Porosität von 200 bis 800 m²/g aufweisen, wobei die Porosität mittels einer BET-Messung mit Stickstoff bestimmt wird.

Überraschenderweise hat sich gezeigt, dass mit dem erfindungsgemäßen Verfahren qualtiativ sehr gute Beschichtungen erhalten werden. Die Beschichtungen zeichnen sich durch eine hohe photokatalytische Aktivität aus. Ferner zeigen sie bei Benutzung nur wenig Abrieb sowie eine hohe Beständigkeit gegen Kratzer und andere Gebrauchsspuren. Außerdem zeigen sich die Beschichtungen vorteilhafterweise in einem satten gelb, so dass sofort ersichtlich ist, dass die Beschichtungen Teile des sichtbaren Lichtes absorbieren. Mit dem erfindungsgemäßen Verfahren wird es somit möglich, photokatalytisch aktive Beschichtungen, die insbesondere auch durch Wellenlängen des sichtbaren Lichts anregbar sind, qualitativ sehr hochwertig herzustellen und dies auf sehr wirtschaftliche Weise. Die photokatalytische Aktivität und insbesondere die photokatalytische Aktivität im sichtbaren Licht der Spritzpartikel wird mit dem erfindungsgemäßen Verfahren nicht vermindert sondern erstaunlicherweise sogar erhöht. Dies gilt erstaunlicherweise auch für eine photokatalytische Aktivität im sichtbaren Licht, welche sehr leicht bei höheren Temperaturen, wie sie beim Kaltgasspritzen verwendet werden, zerstört wird, da eine solche Aktivität auf einer Verschiebung in der Bandstruktur der Elektronen beruht. Die Verschiebung der Bandstruktur wird wiederum meist vorteilhafterweise durch eine Dotierung mit Fremdatomen erreicht. Die Anmelderin nimmt an, dass dies wohl darauf zurückzuführen ist, dass bei dem erfindungsgemäßen Verfahren eine Wechselwirkung von Trägergas und Spritzpartikeln stattfindet, welche zu der gewünschten Bandverschiebung führen kann. Ausschlaggebend sind dafür wohl die Verfahrensparameter beim Kaltgasspritzen in Kombination mit den Eigenschaften der Spritzpartikel.

Vorteilhafterweise weist das Trägergas vor dem Düsenhals eine Temperatur von mehr als 400 °C, bevorzugt von mehr als 800 °C, besonders bevorzugt von mehr als 900 °C auf. Selbst Temperaturen von mehr als 1000 °C, ja sogar von mehr als 1100 °C sind möglich. Trotz der hohen Temperatur im Kaltgasspritzprozess, welche dazuführt, dass im heißen Trägergas auch die Spritzpartikel erwärmt werden, bleibt die photokatalytische Aktivität der Spritzpartikel erhalten und es können photokatalytisch aktive Beschichtungen gespritzt werden. Es hat sich nunmehr gezeigt, dass mit zunehmender Temperatur des Trägergases die photokatalytische Aktivität der Beschichtung sogar zunimmt. Dies ist umso überraschender, da eigentlich zu erwarten wäre, dass mit zunehmender Temperatur die besonderen Eigenschaften der Spritzpartikel zurückgehen. Erstaunlicherweise kann das Trägergas sogar eine solche hohe Temperatur aufweisen, und es entsteht trotzdem eine Beschichtung mit hoher photokatalytischer Aktivität.

Mit besonderem Vorteil wird Stickstoff als Trägergas verwendet. Der Stickstoff kann in die nanokristallinen Agglomerate eindringen, da diese für Stickstoff offenporig sind. Bezüglich des Stickstoffs weisen die nanokristallinen Agglomerate somit eine sehr hohe Oberfläche auf. Der Stickstoff kann sich folglich im großen Umfang an die Nanokristallite anlagern und mit diesen in Wechselwirkung treten. Da nun vorteilhafterweise auch die Temperatur von Stickstoff und Spritzpartikel hoch ist (siehe vorherigen Absatz) wird die Reaktion von Stickstoff mit den Nanokristalliten sehr unterstützt. Überraschenderweise hat es sich nun gezeigt, dass trotz der hohen Temperatur die Reaktion derartig abläuft, dass während des Kaltgasspritzprozesses die photokatalytische aktive, ja sogar die im sichtbaren Licht photokatalytische aktive Form der Nanokristallite entsteht.

Mit Vorteil enthalten die nanokristallinen Agglomerate Titandioxid (TiO₂), Wolframtrioxid (WO₃), Strontiumtitanat (SrTiO₃), Zinndioxid (SnO₂), Siliziumcarbid (SiC), Natriumtantaloxid (NaTaO), Zinkoxid (ZnO), alpha-Eisen(III)oxid (α-Fe₂O₃), Bismutvanadat (BiVO₄), Tantaloxidnitrid (TaON), (III)Tantal(V)nitrid (Ta₃N₅), Indiumtantal(IV)oxid (InTaO₄) oder/und Indiumniob(IV)oxid (InNbO₄). Besonders bevorzugt ist hieraus Titandioxid (TiO₂), insbesondere als Anatase. Diese Verbindungen weisen eine photokatalytische Aktivität auf, insbesondere eine photokatalytische Aktivität im sichtbaren Licht. Werden diese Verbindungen in dem erfindungsgemäßen Verfahren verwendet, zeigt sich dass ihre photokatalytische Aktivität trotz der Belastung, die sie Spritzpartikel beim Kaltgasspritzen ausgesetzt sind, erhalten bleibt und sich meist sogar verbessert, insbesondere ihre photokatalytische Aktivität im sichtbaren Licht.

Titandioxid in der Modifikation Anatase wandelt sich ab einer Temperatur von über 700 °C und mit höherer Temperatur zunehmend schneller in die Modifikation Rutil um. Als Rutil ist Titandioxid jedoch photokatalytisch inaktiv. Mit dem erfindungsgemäßen Verfahren entstehen nun trotz einer Temperatur, die deutlich über 700 °C und damit oberhalb der unter sonst üblichen Verfahren beobachteten Umwandlungstemperatur in die inaktive Rutilphase liegt, photokatalytisch aktive, insbesondere im sichtbaren Licht photokatalytisch aktive Beschichtungen. Es tritt also nicht die aufgrund der hohen Temperatur von Trägergas und Spritzpartikel zu erwartende Umwandlung der Nanokristallite ein, sondern es entsteht vielmehr die gewünschte Modifikation in verstärkter Weise.

In vorteilhafter Ausgestaltung der Erfindung weisen die nanokristallinen Agglomerate eine Porosität von 250 bis 600 m²/g (Quadratmeter pro Gramm), bevorzugt von 280 bis 450 m²/g auf. Die Porosität wird mittels einer BET-Messung mit Stickstoff bestimmt. Damit eine photokatalytisch aktive Schicht entsteht, muss also ein Pulver mit Spritzpartikeln verwendet werden, die einer Porosität gemäß Anspruch 1, bevorzugt wie eben angegeben, aufweisen. Es müssen somit sehr offenporige Agglomerate verwendet werden.

Bevorzugt weisen die nanokristallinen Agglomerate eine Härte zwischen 0,1 und 4 GPa (Giga Pascal), vorzugsweise zwischen 0,2 und 2 GPa auf, wobei die Härte mit Nanoindenter bestimmt wurde. Eine solche Härte ist einerseits ausreichend, dass die nanokristallinen Agglomerate zum Kaltgasspritzen eingesetzt werden können und anderseits ist die Härte genügend gering, so dass die notwendige Porosität vorhanden ist.

Mit ganz besonderem Vorteil wird somit ein Pulver verwendet, das Spritzpartikel enthält, welches Titandioxid in der Modifikation Anatase enthalten. Die Spritzpartikel bestehen also vorteilhafterweise zumindest teilweise aus nanokristallinen Partikeln aus Titandioxid in der Modifikation Anatase. Diese weisen vorteilhafterweise eine Größe von 5 bis 30 Nanometer auf. Diese nanokristallinen Partikel wurden zu nanokristallinen Agglomeraten verarbeitet. Die nanokristallinen Partikel werden also agglomeriert zu nanokristallinen Agglomeraten und diese vorteilhafterweise gesintert. Durch Sintern werden die nanokristallinen Agglomerate härter, sodass sie den Belastungen beim Kaltgasspritzen standhalten. Die nanokristallinen Agglomerate weisen bevorzugt eine Größe von 5 bis 150 µm, besonders bevorzugt von 10 bis 30 µm auf. Die nanokristallinen Agglomerate erfüllen die Anforderung hinsichtlich Porosität und Härte, so dass diese einerseits genügend offenporig sind, damit der Stickstoff mit den Spritzpartikeln wechselwirken kann und andererseits genügend Härte aufweisen, damit diese im Gasstrahl der Kaltgasspritzanlage beschleunigt werden können. Beim Auftreffen auf den zu beschichtenden Gegenstand bildet sich eine im sichtbaren Licht photokatalytisch aktive Schicht aus.

Mit dem erfindungsgemäßen Verfahren werden also Parameter verwendet werden, welche bewirken, dass die Spritzpartikel beim Aufprall auf den zu beschichtenden Gegenstand eine Geschwindigkeit und eine Verformbarkeit aufweisen, welche derartig ist, dass festhaftende und photokatalytisch aktive Beschichtungen entstehen. Dies ist wohl darauf zurückzuführen, dass die Spritzpartikel beim Auftreffen kontrolliert aufbrechen und danach neue Bindungen entstehen, was zur Ausbildung der Beschichtung führt. Diese Ausbildung der Beschichtung ist also auf die Eigenschaften des Spritzpulvers zurückzuführen.

Mit ganz besonderem Vorteil besteht das Spritzpulver nahezu ausschließlich aus nanokristallinen Agglomeraten. Dem Spritzpulver wird also keine metallische oder sonstige zusätzliche Komponente zugegeben, es enthält also neben den nanokristallinen Agglomeraten lediglich Verunreinigungen. Zusätzliche Komponenten sind nicht erforderlich, da die Eigenschaften der Spritzpartikel derartig sind, dass diese als Spritzpulver kaltgasgespritzt werden können.

In vorteilhafter Ausgestaltung der Erfindung werden zumindest die photokatalytisch aktiven Spritzpartikel aus nanokristallinen Agglomeraten in einer Vorkammer oder/und in einem verlängerten konvergenten Bereich mittels dem Trägergas erwärmt. Eine Vorkammer ist ein Bereich, der sich vor dem konvergenten Bereich der Düse befindet. Eine verlängerter konvergenter Bereich bedeutet, dass sich das Zulaufen der Düse auf den Düsenhals über eine weiten Bereich erstreckt. Eine solche Kaltgasspritzdüse, die eine hohe Verweilzeit von Spritzpartikel im warmen Trägergas aufweist, zeigt beispielsweise die EP 1 791 645. Zur Erwärmung der nanokristallinen Agglomerate mittels des Trägergases werden zumindest die nanokristallinen Agglomerate, insbesondere das gesamte Spritzpulver vor oder in den vorderen Bereich der Vorkammer oder des verlängerten konvergenten Bereichs injiziert. Weist die Kaltgasspritzpistole nun eine Vorkammer oder einen verlängerten konvergenten Bereich auf, werden die Spritzpartikel von dem warmen Trägergas besonders gut erwärmt, da die Verweilzeit in dem warmen Gas lange ist, so dass ein Wärmeübergang auf die Spritzpartikel stattfinden kann. Im divergenten Bereich der Düse, also hinter dem Düsenhals kühlt das Trägergas aufgrund der Expansion wieder ab, so dass hier die Spritzpartikel nicht mehr wärmer werden.

Mit besonderem Vorteil werden mit dem erfindungsgemäßen Verfahren Beschichtungen mit photokatalytischer Aktivität im sichtbaren Licht hergestellt. Weisen die Beschichtungen eine photokatalytische Aktivität auch im sichtbaren Licht auf, finden die gewünschten Reaktionen für beispielsweise Reinigung und Desinfektion statt, wenn lediglich sichtbares Licht vorhanden ist. UV-Licht ist somit nicht notwendig. Dies ist von Vorteil, wenn die Beschichtungen in Zimmern und Räumen eingesetzten werden sollen, die künstlich beleuchtet werden oder in die Tageslicht über Fenster einfällt. Solches Licht weist im Gegensatz zu Tageslicht keinen oder nur einen sehr geringen UV-Anteil auf. Folglich sind die mit dem erfindungsgemäßen Verfahren hergestellten Schichten auch in Innenräumen einsetzbar.

In vorteilhafter Ausgestaltung der Erfindung sind die Beschichtungen mindestens 80 µm, bevorzugt mindestens 100 µm dick. Mit dem erfindungsgemäßen Verfahren lassen sich also dicke Schichten erzeugen. Mit Vorteil weisen die Beschichtungen eine Dicke von mindestens 80 µm, bevorzugt von mindestens 100 µm auf. Mit dem erfindungsgemäßen Verfahren ist es also möglich, dicke Beschichtungen herzustellen. Dicke Beschichtungen zeichnen sich dadurch aus, dass sie dicker sind als eine Lage Spritzpartikel. Sie weisen also mehr als eine Lage Spritzpartikel auf. Bei dicken Beschichtungen ist die Duktilität der Werkstoffpaarung offensichtlich von untergeordneter Bedeutung und es führen andere Bindemechanismen beim Partikelaufprall zur Anbindung an das Substrat und zum Aufbau der Schicht. Dicke Schichten sind, wenn sie im sichtbaren Licht photokatalytisch aktiv sind, satt gelb und lassen sich als solche leicht erkennen.

Es ist festzustellen, dass die Beschichtungen vorteilhafterweise keine metallische Komponente erhalten. Auch enthalten die Beschichtungen vorteilhafterweise keine anderen Komponenten. Mit dem erfindungsgemäßen Verfahren ist es also möglich, eine Beschichtung herzustellen, welche, abgesehen von üblichen Verunreinigungen, ausschließlich aus Titandioxid besteht.

Weiterhin werden Beschichtungen, welche mit dem erfindungsgemäßen Verfahren hergestellt sind, beansprucht. Die mit dem erfindungsgemäßen Verfahren hergestellten Beschichtungen zeichnen sich durch ihre Homogenität und ihre Schichtdicke aus. Diese Eigenschaften, die nur die mit dem erfindungsgemäßen Verfahren hergestellten Beschichtungen aufweisen, lassen sich beispielsweise im Schliffbild erkennen. Im Lichtmikroskop können Homogenität und Schichtstärke bestimmt werden, im Transmissionselektronenmikroskop erkennt man die nanokristallinen Primärpartikel. Auch zeigt die Beschichtung den zusätzlichen, während des Spritzprozesses aufgenommenen Stickstoff beziehungsweise dessen Einfluss auf die Oberflächenstruktur und die Färbung der Beschichtung.

Vorteilhafterweise weist die Beschichtung eine photokatalytische Aktivität im sichtbaren Licht auf. Auch bestehen die Beschichtungen vorteilhafterweise aus Titandioxid.

Beansprucht werden ferner Gegenstände, welche eine solche erfindungsgemäße Beschichtung aufweisen. Vorteilhafterweise ist dabei unter der Beschichtung auf dem zu beschichtenden Gegenstand eine Haftvermittlungsschicht, welche für eine Haftvermittlung zwischen dem zu beschichtenden Gegenstand und der Beschichtung sorgt, aufgebracht. Dadurch wird die Haltbarkeit der Beschichtung verbessert. Das erfindungsgemäße Verfahren wird also in einer vorteilhaften Ausgestaltung dahingehend ergänzt, dass vor dem Kaltgasspritzen eine Haftvermittlungsschicht aufgebracht wird.

Im Folgenden wird das erfindungsgemäße Verfahren unter Verwendung einer beispielhaften Kaltgasspritzpistole näher erläutert.

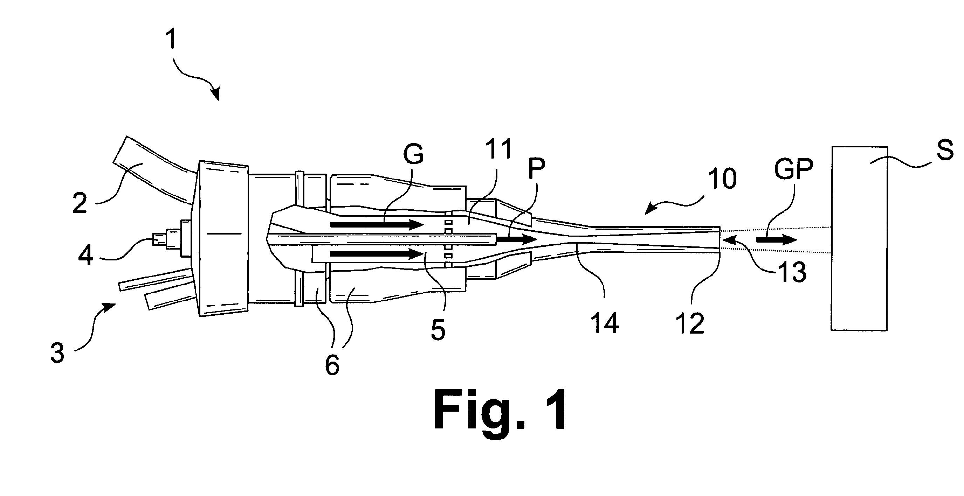

In Figur 1 ist dazu eine Kaltgasspritzpistole schematisch dargestellt und insgesamt mit 1 bezeichnet. Die Kaltgasspritzpistole 1 weist eine Kaltgasspritzdüse 10 auf, die im Folgenden nun näher erläutert wird.

Die Kaltgasspritzpistole 1 ist auf ein Substrat S gerichtet und weist Gaseinlässe 2, 3 auf, über die ein Trägergas G, insbesondere ein erwärmter Gasstrom eines Trägergases G, bereitgestellt werden kann. Zur Erwärmung des Trägergases G ist eine stromaufwärtig der Spritzpistole 1 angeordnete Gasheizeinrichtung vorgesehen. Weitere Gaseinlässe 3 können zur Einstellung eines Gasgemischs und/oder einer Gastemperatur des Gasstroms G verwendet werden.

Ein Pulvereinlass 4 ist vorgesehen, mittels dessen das Spritzpulver P in die Spritzpistole 1 eingespeist wird. Hierzu ist ein stromaufwärtig der Spritzpistole 1 bereitgestellter, jedoch nicht dargestellter Pulverförderer vorgesehen. Das Trägergas G und das Pulver P gelangen in eine Mischkammer 5, die innerhalb eines mehrteiligen Gehäuses 6 der Spritzpistole 1 angeordnet ist. Das mehrteilige Gehäuse 6 ist teilweise geöffnet dargestellt.

Eine Kaltgasspritzdüse 10 besitzt spritzpistolenseitig einen Düseneingang 11 und substratseitig eine Düsenmündung 12. Zwischen Düseneingang 11 und Düsenmündung 12 erstreckt sich ein Düsenkanal 13. Der Düsenkanal 13 weist einen Düsenhals 14 auf. Vom Düseneingang zum Düsenhals 14 verjüngt sich der Querschnitt des Düsenkanals 13. Dies ist der konvergente Bereich. Vom Düsenhals 14 zur Düsenmündung 12 erweitert sich der Düsenkanal 13 im sogenannten divergenten Bereich, so dass mittels des Laval-Effekts eine Beschleunigung eines komprimierten und erwärmten Gasstroms bewirkt werden kann. Das Trägergas G mit dem entsprechend erwärmten Spritzpulver P wird als Gas-Pulver-Gemisch GP auf das Substrat S gerichtet.

In diese Kaltgasspritzpistole 1 wird nun über den Pulvereinlass 4 ein Spritzpulver eingeführt, das die weiter oben genannten vorteilhaften Eigenschaften besitzt. Insbesondere handelt es sich um ein Pulver aus nanokristallinen Agglomeraten aus Titandioxid in der Modifikation Anatase, welches offenporige und doch fest zusammenhaltende Agglomerate aufweist. Dieses Pulver wird in dem Trägergas G, welches vorzugsweise aus Stickstoff besteht, in dem konvergenten Bereich der Düse bis hin zum Düsenhals 14 erwärmt. Im divergenten Bereich der Düse hinter dem Düsenhals 14 werden Gas und Pulver auf ausreichend hohe Geschwindigkeiten beschleunigt. Das Pulver trifft dann mit hoher kinetischer Energie auf das Substrat.

Auf dem Substrat S bildet sich die erfindungsgemäße Beschichtung, so dass es sich beim Substrat S um den beschichteten Gegenstand beziehungsweise um ein Teil des beschichteten Gegenstandes handelt.

## Patentansprüche

1. Verfahren zum Kaltgasspritzen, bei welchem ein Spritzpulver, welches photokatalytisch aktive Spritzpartikel enthält, mittels eines Trägergases in einer Düse beschleunigt wird und beim Auftreffen auf ein Substrat eine Beschichtung bildet, **dadurch gekennzeichnet, dass** zumindest ein Teil der photokatalytisch aktiven Spritzpartikel aus nanokristallinen Agglomeraten bestehen, welche eine Porosität von 200 bis 800 m²/g aufweisen, wobei die Porosität mittels einer BET-Messung mit Stickstoff bestimmt wird.

2. Verfahren nach Anspruch 1, **dadurch gekennzeichnet, dass** das Trägergas vor dem Düsenhals eine Temperatur von mehr als 400 °C, bevorzugt von mehr als 800 °C, besonders bevorzugt von mehr als 900 °C aufweist.

3. Verfahren nach Anspruch 1 oder 2, **dadurch gekennzeichnet, dass** Stickstoff als Trägergas verwendet wird.

4. Verfahren nach einem der Ansprüche 1 bis 3, **dadurch gekennzeichnet, dass** die nanokristallinen Agglomerate Titandioxid (TiO₂), Wolframtrioxid (WO₃), Strontiumtitanat (SrTiO₃), Zinndioxid (SnO₂), Siliziumcarbid (SiC), Natriumtantaloxid (NaTaO), Zinkoxid (ZnO), alpha-Eisen(III)oxid (α-Fe₂O₃), Bismutvanadat (BiVO₄), Tantaloxidnitrid (TaON), (III)Tantal(V)nitrid (Ta₃N₅), Indiumtantal(IV)oxid (InTaO₄) oder/und Indiumniob(IV)oxid (InNbO₄) enthalten, insbesondere Titandioxid als Anatase.

5. Verfahren nach einem der Ansprüche 1 bis 4, **dadurch gekennzeichnet, dass** die nanokristallinen Agglomerate eine Porosität von 250 bis 600 m²/g, bevorzugt von 280 bis 450 m²/g aufweisen.

6. Verfahren nach einem der Ansprüche 1 bis 5, **dadurch gekennzeichnet, dass** die nanokristallinen Agglomerate eine Härte zwischen 0,1 und 4 GPa, vorzugsweise von 0,2 bis 2 GPa aufweisen, wobei die Härte mit einem Nanoindenter bestimmt wird.

7. Verfahren nach einem der Ansprüche 1 bis 6, **dadurch gekennzeichnet, dass** zumindest die photokatalytisch aktiven Spritzpartikel aus nanokristallinen Agglomeraten in einer Vorkammer oder in einem verlängerten konvergenten Bereich mittels des Trägergases erwärmt werden.

8. Verfahren nach einem der Ansprüche 1 bis 7 , **dadurch gekennzeichnet, dass** Beschichtungen mit photokatalytischer Aktivität im sichtbaren Licht hergestellt werden.

9. Verfahren nach einem der Ansprüche 1 bis 8, **dadurch gekennzeichnet, dass** die Beschichtungen mindestens 80 µm, bevorzugt mindestens 100 µm dick sind.

10. Beschichtungen, hergestellt mit einem Verfahren gemäß mindestens einem der Ansprüche 1 bis 9.

11. Beschichtungen nach Anspruch 10, aufweisend eine photokatalytische Aktivität im sichtbaren Licht.

12. Beschichtungen nach Anspruch 10 oder 11 bestehend aus Titandioxid.

13. Beschichtungen nach einem der Ansprüche 10 bis 12 aufweisend eine Dicke, welche größer als eine Lage Spritzpartikel ist, insbesondere von mindestens 80 µm bevorzugt von mindestens 100 µm.

14. Gegenstände, welche eine Beschichtung gemäß mindestens einem der Ansprüche 11 bis 14 aufweisen.

15. Gegenstände nach Anspruch 14, **dadurch gekennzeichnet, dass** unter der Beschichtung auf dem zu beschichtenden Gegenstand eine Haftvermittlungsschicht, welche für eine Haftvermittlung zwischen dem zu beschichtenden Gegenstand und der Beschichtung sorgt, aufgebracht ist.
